(19) Europäisches Patentamt
European Patent Office
Office européen des brevets

(11) **EP 0 903 660 A1**

(12) **EUROPEAN PATENT APPLICATION**

(43) Date of publication:
**24.03.1999 Bulletin 1999/12**

(51) Int Cl.6: **G06F 1/10**

(21) Application number: **98306762.0**

(22) Date of filing: **24.08.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.09.1997 US 934418**

(71) Applicant: **LSI LOGIC CORPORATION**
**Milpitas, CA 95035 (US)**

(72) Inventor: **Graef, Stefan**
**Milpitas, California 95035 (US)**

(74) Representative: **Hallam, Arnold Vincent et al**
**LEWIS & TAYLOR**
**5 The Quadrant**
**Coventry, CV1 2EL (GB)**

(54) **Segmented clock distribution network and method therefor**

(57)     A method for providing a clock signal to clock recipients in an integrated circuit is provided herein that comprises the steps of providing the clock signal to at least two groups of clock recipients in a manner that the first group of clock recipients are clock together at a different time in which the second group of clock recipients are clocked together. A clock distributing circuit is also provided herein that includes a first and second balanced clock tree and a delay or phase-shifting element for altering the timing or phase of the clock signal in a manner that the clock recipients pertaining to the first balanced clock tree are clock together at a different time than the time that clock recipients pertaining to the second balanced clock tree are clocked together. By segmenting the clocking of different groups of clock recipients so that they are clocked at different times, problems due to ground bounce and $V_{DD}$ noise are reduced.

FIG. 5

# Description

## FIELD OF INVENTION

This invention relates generally to clock distribution for digital and computer systems, and in particular, to an apparatus and method for segmenting the distribution of a clock signal to reduce clock skew, ground bounce, and $V_{DD}$ noise.

## BACKGROUND OF THE INVENTION

The routing and distribution of the clock to elements of an integrated circuit, or more specifically, an application specific integrated circuit (ASIC), is an important factor to consider in the design of ASICs. To take an analogy, for instance, the clock of an ASIC may be seen as the heart and blood flow of a human body, whereas the clock routing and distribution of an ASIC may be seen as the arteries and veins of a human body. Just like the human body requires that the arteries and veins be properly distributed in order for each organ to function properly and together with other organs, the clock routing and distribution of an ASIC should be designed so that the clock-receiving elements function properly and together so that the intended functions of the ASIC are achieved. One of the intended functions of clock recipient elements of an ASIC, for example, is to propagate data to an intended functional destination of an ASIC.

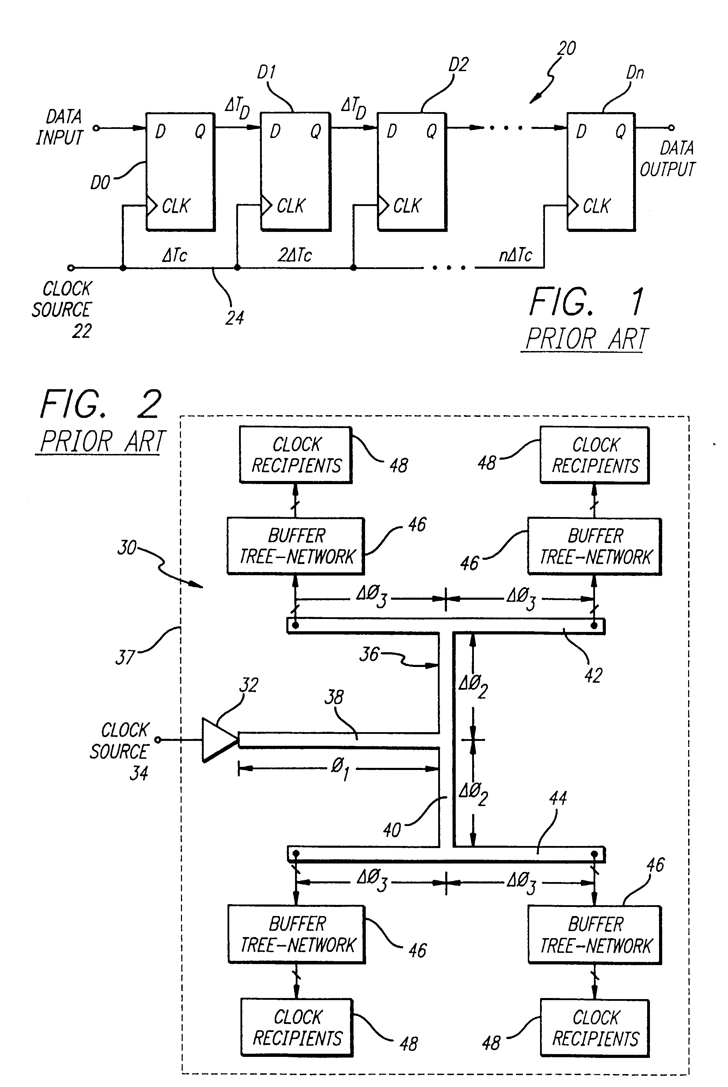

Referring to Figure 1, a simple prior art chain of D-type flip-flops 20 is shown, wherein the D flip-flops (D0-Dn) are shown sequentially cascaded together to propagate data from a data input to a data output. As it is conventionally known of these types of data-propagating chains of D-type flip-flops, the Q-output of one of the flip-flops in the chain is coupled to the D-input of the next flip-flop in the chain in the direction in which data propagates. Thus, in the example shown in Figure 1, the Q-output of flip-flop D0 is coupled to the D-input of flip-flop D1 ; the Q-output of flip-flop D1 is coupled to the D-input of flip-flop D2; and so on. The chain of D-Flip-flops are driven by a common clock source 22 by way of a clock distribution network 24. In the example shown in Figure 1, the clock distribution network 24 includes an input for the clock source 22 situated near the flip-flip D0, and extends therefrom parallel with the flip-flops in the direction of data propagation, and includes a branch to each of the clock inputs of the flip-flops in the chain 20.

In operation, a clock pulse or triggering edge of the clock causes each of the D flip-flops in the chain 20 to propagate data from its D-input to its Q-output. Each consecutive clock pulse or triggering edge causes the data to move further down the chain of flip-flops. In the example shown in Figure 1, per every clock pulse or triggering edge, data at the D-inputs of flip-flops D0-Dn propagates to the Q-outputs of the flip-flops D0-Dn, respectively. If there are no delays between the Q-outputs and the D-inputs of consecutive flip-flops in the chain 20, then per every clock pulse or triggering edge, data at the D-inputs of the flip-flops propagates to the D-inputs of the next flip-flops in the chain 20. It is desired that the clock pulse or triggering edge of the clock occur at the same time (or are in-phase) at the inputs of all the flip-flops, in order for the data as a whole to propagate together down the chain 20.

The problem with the data propagating chain 20 is that with the clock distribution network 24 shown in Figure 1, the triggering edge or pulse of the clock does not reach all the clock inputs of the flip-flops at the same time. This results in the data not properly propagating as a whole through the chain; a condition generally termed in the art as "clock skew." To illustrate the problem of clock skew, assume that the time delay for data to propagate from the Q-output of a flip-flop to the D-input of the next flip-flop in the chain is given by $\Delta T_D$. Also, for this example, because the clock distribution network 24 shown in Figure 1 requires the clock to propagate a longer length to reach the clock inputs of the flip-flops down the chain 20, assume that the time difference of clock at the clock inputs of consecutive flip-flops is given by $\Delta T_C$.

Given the above assumptions for the example, if the time delay $\Delta T_D$ for the data to propagate from the Q-output of flip-flop D0 to the D-input of flip-flop D1 is more than the time difference $\Delta T_C$ of the clock at the clock inputs of such flip-flops, then triggering edge of the clock at the clock input of flip-flop D1 will clock the current data at its D-input to its Q-output before the next data ( the data that propagated through flip-flop D0) propagates to the D-input of flip-flop D1. This is the desired result, that the next data does not propagate to the D-input of the next flip-flop before that flip-flop is clocked for the current data.

However, with the clock distribution network 24 shown in Figure 1, problems occur for flip-flops down the chain 20. For instance, the time delay of the clock to reach the clock input of flip-flop D2 is given by $2\Delta T_D$. Assume now that the time delay $\Delta T_D$ is smaller than the time delay $2\Delta T_c$, then the data that propagated through flip-flop D1 will reach the data input of the flip-flop D2 before it is clocked. Thus, instead of the current data propagating through flip-flop D2 for that triggering time, the next data propagates through the flip-flop D2. Thereby, losing the current data for flip-flop D2. This results in the data as a whole improperly propagating down the chain 20. Thus, it is desirable that the clock distribution network be designed so that the flip-flops, or more generally, the clock recipient elements be clocked at substantially the same time to reduce or eliminate the effects of clock skew.

Referring now to Figure 2, a block diagram of a prior art clock distribution network 30 formed on an ASIC substrate 37 is shown that reduces or eliminates the problem of clock skew. The prior art clock distribution network 30 reduces the clock skew problem by attempting to cause the phase of the clock signal at the clock inputs of all the clock recipient elements in the ASIC to be substantially the same. The clock distribution network 30 is generally referred in the relevant art as a "balanced clock tree," and therefore, will be referred to as such hereinafter.

The balanced clock tree 30 shown in Figure 2 includes a main buffer 32 for receiving a clock signal from a clock source 34, and used as an initial driving stage for supplying the clock signal to the clock recipients of the ASIC. The output of the main buffer 32 is coupled to an H-shaped conductive tree structure 36 that is used as an initial conduit for the clock to propagate through to reach the clock recipients. The H-shaped conductive tree structure 36 includes an initial entry wide conductive line 38 (or entry conductive line, for short) having a first end coupled to the output of the main buffer 32 and a second opposite end connected to the middle of the mid-section conductive branch 40 of H-tree conductive structure. The ends of the mid-section conductive branch 40 connect to the middle of the outer conductive branches 42 and 44 of the H-tree conductive structure 36. Each of the ends of the outer conductive branches 42 and 44 is coupled to a buffer tree-network 46, which is, in turn, coupled to the clock recipients 48.

The H-tree conductive structure 36 including the entry conductive line 38 are designed so that the phase of the clock signal as it is split by the H-tree structure are substantially the same at the ends of the outer conductive branches 42 and 44, or alternatively, at the points in which the buffer tree-networks 48 connect to the H-tree structure. This is accomplished by forming the H-tree structure 36 on a substrate 37 that has substantially uniform dielectric constant, and by having the same conductive line lengths from the output of the main buffer 32 to the ends of the outer conductive branches 42 and 44, or alternatively, at the points that the buffer tree-networks 48 connect to the H-tree structure.

For instance, in the example balanced clock tree 30 shown in Figure 2, the clock signal generated at the output of the main buffer 32 initially undergoes a phase shift of $\Delta\phi_1$ as it propagates through the entry conductive line 38. When the clock signal encounters the mid-section conductive line 40 of the H-tree structure 36, it splits the clock signal into two clock signals, each propagating towards respective outer conductive lines 42 and 44. The two clock signals each undergo a phase shift $\Delta\phi_2$ after propagating through the mid-section conductive line 40 of the H-tree structure 36 since the length of the mid-section line is the same on both sides of the entry conductive line 38.

When the two clock signals reach the outer conductive lines 42 and 44, they both split into four clock signals, each propagating towards respective ends of the outer conductive lines, or alternatively, towards the points in which the buffer tree-networks 46 connect to the H-tree structure 36. When the clock signals reach these points from the middle of respective outer conductive lines 42 and 48, they would have undergone a phase shift $\Delta\phi_3$. Thus, the phases of the clock signals at the points where the buffer tree-network are substantially the same since they would have all undergone a total phase shift of:

$$\Delta\phi_{total} = \Delta\phi_1 + \Delta\phi_2 + \Delta\phi_3$$

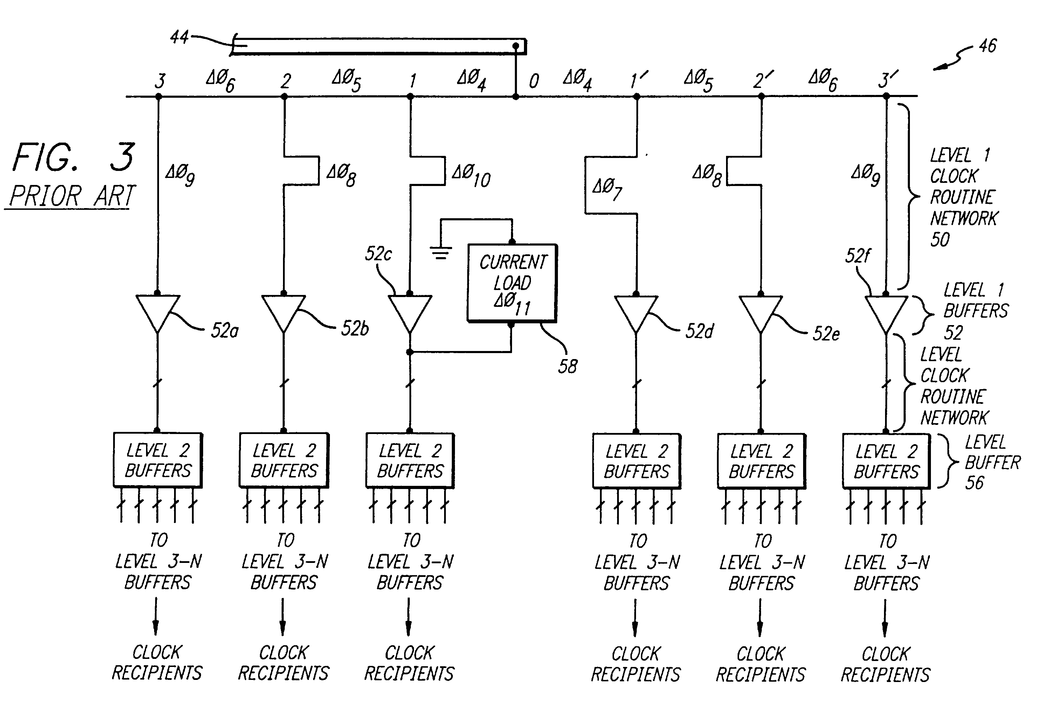

Referring now to Figure 3, a schematic and block diagram of a prior art buffer tree-network 46 of Figure 2 is shown. The buffer tree-network 46 provides for further levels of driving stages for driving the clock signal to each of the clock recipients 48 of the ASIC. Like the H-tree conductive structure 36, the buffer tree-network 46 is also designed to distribute the clock signal so that the phases of the clock signal at the clock inputs of all the clock recipients are substantially the same.

In more detail, the buffer tree-network 46 may comprise of one or more levels of parallel buffers. In the example shown in Figure 3, there are N-levels of parallel buffers. The level 1 buffers 52 are the first level of buffers which initially drives the clock signal that is picked off the ends of the outer conductive lines 42 and 44 of the H-tree conductive structure 36. If there are two levels of buffers in the ASIC, then the output of the level 1 buffers are coupled to the inputs of the level 2 buffers 56. If there are more than two levels of buffers in the ASIC, then the outputs of the buffers at one level are coupled to the inputs of the buffers at the consecutive level. In the preferred embodiment, the buffers "fan-out" from one level down to other levels. In other words, the output of a buffer at one level is coupled to the inputs of several buffers in the next level, and so on to meet the ASIC clock signal load.

The buffer tree-network 46 further includes a clock routing network for each level of parallel buffers. For instance, a level 1 clock routing network 50 is included that routes the clock signal from the ends of the outer conductive lines 42 and 44 of the H-tree conductive structure 36 to the inputs of the level 1 buffers 52. If there are two levels of buffers, then a level 2 clock routing network 54 is included for routing the clock signal from the outputs of the level 1 buffers 52 to the inputs of the level 2 buffers 56. If there are more then two levels of buffers, then there is a clock routing network for each level of buffers for routing the clock signal from the output of buffers at one level to the inputs of buffers at the consecutive level.

Each of the clock routing networks route the clock signal to the inputs of the next level buffers in a manner that the phases of the clock signals at such inputs are substantially the same. For instance, level clock routing network 50 routes the clock signal from the ends of the outer conductive lines 42 and 44 to the inputs of the level 1 buffers 52 in a manner that the phases of the clock signals at the inputs of the buffers are substantially the same. The level 2 clock routing network likewise routes the clock signals from the outputs of the level 1 buffers 52 to the inputs of the level 2 buffers 56 in a manner that the phases of the clock signals are substantially the same at the inputs of the level 2 buffers; and so on, in the same manner for all other clock routing networks pertaining to the other levels of buffers 3-N.

The level 1 clock routing network 50, which is shown in more detail in Figure 3 than the other clock routing networks, is used herein as an example of one manner of routing the clock signals so that their phases at the inputs of the buffers at one level are substantially the same. The other levels of clock routing network can be routed in such a similar manner. In one manner, the level 1 clock routing network 50 attempts to equalize the clock signal phase at the buffer input by having the conductive line lengths from the ends of the outer conductive lines 42 and 44 of the H-tree conductive network 36 to the inputs of the level 1 buffers to be substantially the same. For instance, the conductive line length from node 0 (the point in which the level 1 clock routing network 50 connects to the H-tree conductive structure 36) to the inputs of buffers 52a and 52f which are taken off of nodes 3 and 3' are substantially the same, and results in a phase shift of the clock signal given by:

$$\Delta\phi_{52a} = \Delta\phi_{52f} = \Delta\phi_4 + \Delta\phi_5 + \Delta\phi_6 + \Delta\phi_9$$

Similarly, the conductive line lengths from node 0 to the inputs of buffers 52b and 52e are substantially the same, and produces a phase shift of the clock signal given by:

$$\Delta\phi_{52b} = \Delta\phi_{52e} = \Delta\phi_4 + \Delta\phi_5 + \Delta\phi_8$$

In order for the phase of the clock signal to be the same at the inputs of buffers 52a, 52b, 52e and 52f, the following relationship holds:

$$\Delta\phi_8 = \Delta\phi_6 + \Delta\phi_9$$

Thus, if the ASIC layout permits, the clock routing networks can be designed to provide substantially the same conductive line lengths from the point of in which the H-tree conductive structure 36 connects to the level 1 clock routing network to each input of the level 1 buffers 52. The same technique can be used for the other clock routing networks, such as level 2 clock routing network 54, so that the conductive line lengths from the output of one of the i'th level buffer to the inputs of the level (i + 1) buffers are all substantially the same.

Sometimes, however, it may be difficult because of layout reasons to provide a conductive line of a sufficient length to equalize the clock signal phases at the inputs of the buffers. To illustrate this, assume for example that the phase shift from node 0 to the input of the buffer 52d is of sufficient length to provide the proper phase of the clock signal at the buffer's input. That is, the phase shift of the clock signal from node 0 to the input of buffer 52d is given by:

$$\Delta\phi_{52d} = \Delta\phi_4 + \Delta\phi_7$$

In order for the clock signal phase at the input of buffer 52d to be equalized with the clock signal at the inputs of buffers 52a, 52b, 52e and 52f, the following relationship holds:

$$\Delta\phi_7 = \Delta\phi_5 + \Delta\phi_8 = \Delta\phi_5 + \Delta\phi_6 + \Delta\phi_9$$

Also assume that the conductive line length between node 0 and the input of the buffer 52c is of insufficient length to cause the clock signal to undergo the proper phase shift. Specifically, because of layout reasons, assume that the conductive line between node 1 and the input of the buffer 52c cannot be made any longer in order to produce the desired phase shift of the clock signal. In other words, the following relationship holds:

$$\Delta\phi_4 < \Delta\phi_7$$

To solve this problem of an insufficient conductive line length, a current load 58 is connected to the output of buffer 52c. The effects of the current load 58 on the clock signal causes it to undergo an additional phase shift $\Delta\phi_{11}$ because it effects the buffer driving response. In order to equalize the clock phase at the output of the buffer 52c with that of the outputs of the other buffers of the same level, the current load is made of sufficient size that the additional phase shift $\Delta\phi_{11}$ results in the clock phase at the output of buffer 52c to be equalized with the others. In other words, the following relationship holds:

$$\Delta\phi_{10} + \Delta\phi_{11} = \Delta\phi_7 = \Delta\phi_5 + \Delta\phi_8 = \Delta\phi_5 + \Delta\phi_6 + \Delta\phi_9$$

Therefore, by varying the length of the conductive lines to each of the input of the buffers and also employing current loads when the conductive lines cannot be made any longer because, for example, of layout reasons, the clock routing networks can be designed to provide substantially the same phase of the clock signal at the output of the buffers of the same level. This can be done for all levels of buffers so that the phases of the clock signal at the output of the N'th level buffers are substantially the same. This is assuming, of course, that each of the buffer in the buffer tree-network 46 causes the clock signal to undergo substantially the same phase shift.

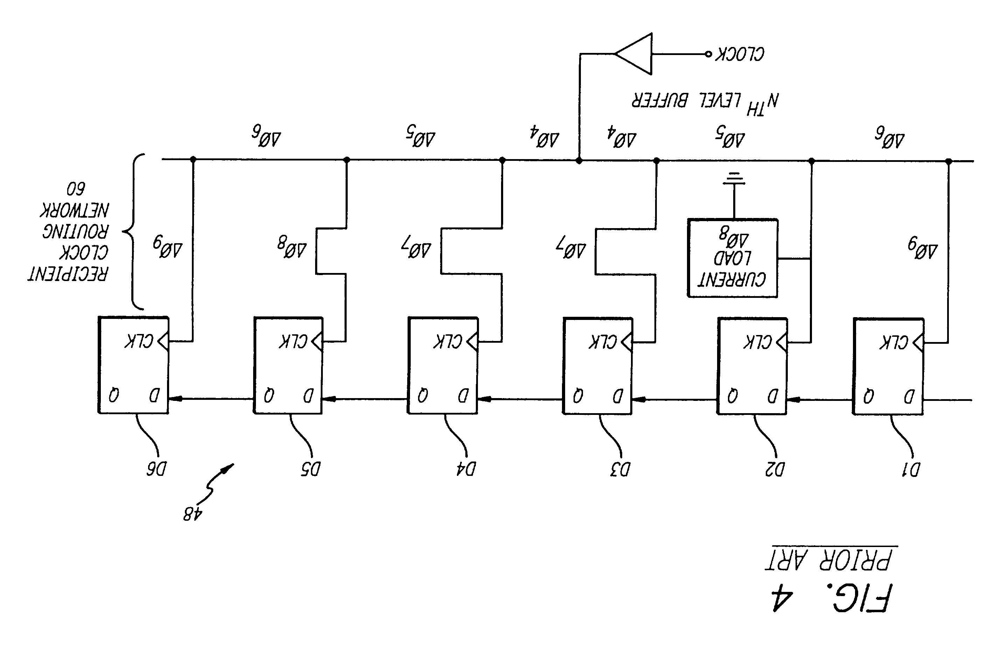

Referring now to Figure 4, a schematic diagram of a group of clock recipients 48, or more specifically, a chain of D-flip flops (D1-D6) is shown, wherein the flip flops are driven by one of the N'th level buffers of the buffer tree-network 46 by way of a recipient clock routing network 60. The clock routing network 60 is similar to the clock routing networks of the buffer tree-network 46 in that it routes the clock signal from the output of one of the N'th buffers to the clock inputs of the clock recipients (D-flip flops D1-D6) so that the phases of the clock signal at each of the clock inputs of the clock recipients are substantially the same. In the example shown in Figure 4, this can be done by designing the clock routing network so that the following phase-shift relationship holds:

$$\Delta\phi_7 = \Delta\phi_5 + \Delta\phi_8 = \Delta\phi_5 + \Delta\phi_6 + \Delta\phi_9$$

In summary, the balanced clock tree 30 routes the clock signal in an ASIC in a manner that the phases of the clock signals at the clock inputs of the clock recipients are substantially the same. This is done by providing an H-tree conductive structure 36 for providing the initial distribution of the clock signal from the ASIC clock input to the inputs of the buffer-tree networks 46 in a manner that the phases of the clock signal thereat are substantially the same. The buffer tree-network 46 includes clock routing networks (e.g. 50 and 54) for providing the clock signal to the buffers in a manner that the phases of the clock signal at the output of each of the buffer within one level are substantially the same. Another similar clock routing network is provided at the output of the last level of buffers so that the clock signal is provided to the clock input of the clock recipients in a manner that the phases of the clock signal thereat are substantially the same. This type of clock distribution reduces the adverse effects of clock skew.

Although the balanced clock tree 30 is useful for reducing clock skew problems, there may be disadvantage to it when the number of clock recipients in an ASIC becomes large. One such disadvantage is that it becomes increasingly difficult to layout or balance the clock distribution network when the number of clock recipient becomes large. Another disadvantage of the balanced clock tree is that when the number of clock recipient becomes large, problems such as ground bounce and $V_{DD}$ noise results. This is because a large number of clock recipients are being clocked at substantially the same time. The result is that it takes a relatively large current to clock all those clock recipients at substantially the same time. This large current causes the ASIC ground to develop voltage during clocking; a condition known as ground bounce. The same large current during clocking also results in the $V_{DD}$ voltage supply to drop during clocking of the clock recipients, which causes noise on the $V_{DD}$ line.

Therefore is a need for a clock distribution network in an ASIC for which the clock signal is provided to each clock recipient in a manner that clock skew, ground bounce and $V_{DD}$ noise are reduced. The clock distribution network should reduce such problems when the ASIC includes a relatively large number of clock recipients.

OBJECT OF THE INVENTION

Therefore, it is a general object of this invention to provide a clock distribution network and method therefor for an integrated circuit.

It is another object of this invention to provide a clock distribution network and method therefor for an integrated circuit that reduces the problem of clock skew.

It is yet another object of this invention to provide a clock distribution network and method therefor for an integrated circuit that reduces the problem of ground bounce.

It is another object of this invention to provide a clock distribution network and method therefor for an integrated circuit that reduces the problem Of $V_{DD}$ noise.

It is another object of this invention to provide a clock distribution network and method therefor for an integrated circuit that reduces the problems of clock skew, ground bounce and VDD noise for an integrated circuit that includes a relatively large number of clock recipients.

It is still another object of this invention to provide numerous embodiments of a clock distribution network for accomplishing the above-mentioned objects.

SUMMARY OF THE INVENTION

The above-mentioned objects and other objects are provided herein, wherein, briefly, a method of providing a clock signal to clock recipients in an integrated circuit is provided herein that comprises the steps of providing the clock signal to a first group of clock recipients, wherein the clock signal at the clocking input of the clock recipients of the first group cycles with a first relative phase; and providing the clock signal to a second group of clock recipients, wherein the clock signal at the clocking input of the clock recipients of the second group cycles with a second relative phase which is different than the first relative phase.

Another aspect of the invention includes a clock distribution network for an integrated circuit, comprising a first balanced clock tree having a first clock input for receiving a clock signal; a delay element for delaying the clock signal a pre-determined amount of time to produce a delayed clock signal; and a second balanced clock tree having a second clock input for receiving the delayed clock signal.

Yet another aspect of the invention includes an integrated circuit comprising a substrate; a first balanced clock tree formed on the substrate that includes a first clock input for receiving a clock signal; a phase shifting element for causing a phase shift in the clock signal; and a second balanced clock tree formed on said substrate that includes a second clock input for receiving the phase-shifted clock signal.

Yet still another aspect of the invention includes a circuit for distributing a clock signal to clock recipients of an integrated circuit comprising a substrate; a conductive structure formed on the substrate that includes at least a first conductive branch for transmitting a clock signal; a first phase-shift element formed at a discontinuing portion of the first conductive branch to produce a phase-shifted clock signal from the clock signal; at least a first group of clock recipients coupled to the first conductive branch for receiving therefrom the clock signal; and at least a second group of clock recipients coupled to the first conductive branch for receiving therefrom the phase-shifted clock signal in a manner that the second group of clock recipients are clocked together at a different time than when said first group of clock recipients are clocked together.

BRIEF DESCRIPTION OF THE DRAWINGS

The above-mentioned objects and other objects and features of the invention and the manner of attaining them will become apparent, and the invention itself will be best understood by reference to the following description of the preferred embodiments of the invention taken in conjunction with the accompanying drawings, wherein:

Figure 1 is a schematic and block diagram of a prior art chain of D flip-flops having data clocked therethrough by a common clock source, shown for the purpose of describing the effects of clock skew;

Figure 2 is a schematic and block diagram of a prior art balanced clock tree used for reducing the effects of clock skew;

Figure 3 is a schematic and block diagram of a prior art buffer network or tree as an element of the prior art balanced clock tree of Figure 2, wherein the buffer network or tree distributes the clock signal to clock recipient elements in a manner that it reduces clock skew;

Figure 4 is a prior art chain of D flip-flops being driven by one of the buffers of the buffer network or tree of Figure 3, wherein the clock signal distribution from the buffer output to the inputs of the flip-flops are configured to reduce clock skew;

Figure 5 is a schematic and block diagram of a clock distribution network as per an embodiment of the invention, which provides for not only the reduction of clock skew, but also provides for the reduction of $V_{DD}$ noise and ground bounce;

Figure 6 is a schematic and block diagram of a clock distribution network as per another embodiment of the invention, which provides for the reduction of clock skew, $V_{DD}$ noise, and ground bounce;

Figure 7 is a layout and block diagram of a clock distribution network as per yet another embodiment of the invention, which provides for the reduction of clock skew, $V_{DD}$ noise, and ground bounce;

Figure 8 is a layout and block diagram of a clock distribution network as per still another embodiment of the invention, which provides for the reduction of clock skew, $V_{DD}$ noise, and ground bounce;

Figure 9 is a layout and block diagram of a clock distribution network as per even another embodiment of the invention, which provides for the reduction of clock skew, $V_{DD}$ noise, and ground bounce;

Figure 10 is a schematic diagram of two chains of clock recipient elements of respective balanced clock distribution groups being in data communication with each other, and a preferred manner of distributing the clock signal as per an embodiment of the invention; and

Figure 11 is a schematic diagram of two chains of clock recipient elements of respective balanced clock distribution groups being in data communication with each other, and another manner of distributing the clock as per another embodiment of the invention.

DETAILED DESCRIPTION OF THE PREFERRED EMBODIMENTS

One aspect of the invention is a method of providing a clock signal to a plurality of clock recipients in an ASIC in a manner that the problems associated with clock skew, ground bounce and $V_{DD}$ noise are reduced. For the purpose of explaining this aspect of the invention, assume that the ASIC includes numerous clock recipients, such as flip flops, latches, registers or others. The method comprises providing a clock signal to a first group of clock recipients in a manner that the first group of clock recipients are clocked together at a time $T_0$, for example. The method further includes providing the clock signal to a second group of clock recipients in a manner that the second group of clock recipients are clocked together at a time $T_1$ that is different than the time $T_0$ when the first group of clock recipients are clocked.

The advantage of the above segmented clock signal distribution method over the prior art is that when the ASIC includes a relatively large number of clock recipients, substantial reduction in ground bounce and VDD noise are achieved if the clock recipients of the ASIC are not all clocked at the same time. With the prior art method, as explained earlier, a balanced clock tree is incorporated in an ASIC so that all the clock recipients of the ASIC are clocked at substantially the same time. The main concern for the prior art method of clocking all clock recipients of an ASIC at substantially the same time is reduction of clock skew. However, as the number of clock recipients in an ASIC grows to a relatively large number, the current required to clock all the clock recipients of an ASIC becomes relatively large. The large source current for the ASIC causes a voltage rise of the ASIC ground during clocking, which results in the adverse effect of ground bounce. Also, this large surge of source current during clocking also adversely affects the $V_{DD}$ supply source to the ASIC, thereby causing VDD noise. In addition, as the number of clock recipients grow in an ASIC, the design and layout of the balanced clock tree becomes increasingly difficult.

So, according to the invention, if the clock recipients of the ASIC can be divided up into a plurality of groups, and each of these groups are clocked at distinct times, then the amount of current required during any clocking of a group is substantially less. The less current required for clocking results in a substantial reduction in ground bounce and $V_{DD}$ noise. In addition, if a balanced clock tree is used for routing the clock signal to one of the groups of clock recipients of the ASIC, then the design and layout of the balanced clock tree is not as difficult because that particular group of clock recipients consists of only a portion of the total clock recipients in the ASIC. In other words, less clock recipients, easier to design and layout a balanced clock tree. Including smaller balanced clock tree for each group of clock recipients, from a design standpoint, is much easier than including a large balanced clock tree for total clock recipients of an ASIC.

The preferred manner of achieving the difference in the timing of the clocking for the first and second groups of clock recipients is by providing the clock signal to the clock input of the clock recipients in the first group in a manner that it cycles at a relative phase different that that of the clock signal at the clock input of the second group of clock recipients. The preferred manner of having the clock signal cycles at a different relative phase at the clock input of each of the groups of clock recipients is by either delaying or phase-shifting the clock signal prior to it being applied to one of the groups of clock recipients. The delaying and phase-shifting, for example, can be performed by a conventional buffer or a driver. Also a small balanced clock tree can be used for each group of clock recipients so that the clock recipients for each group are clocked at substantially the same time. This reduces clock skew problems within each group. It shall be understood that the method can be applied to more than two groups of clock recipients, whereby each group are clocked at different times.

Referring now to Figure 5, a block diagram of a clock distribution network 100 per an aspect of the invention is shown. The clock distribution network 100 is particularly useful for routing the clock signal of an ASIC and is typically formed on the ASIC substrate 102. The clock distribution network 100 may include two or more groups of clock distribution network and recipients, such as clock distribution groups 104, 106 and 108 shown in Figure 5 for illustration purposes. Each of the clock distribution groups includes a group of clock recipients and a smaller clock distribution network for routing the clock signal thereto in a manner that the clock recipients within a group are clocked at substantially the same time in order to reduce clock skew. Each of the clock distribution group includes a common clock input for receiving the clock signal applied to the ASIC.

The clock distribution network 100 further includes a main buffer or driver 110 for initially receiving the clock signal and providing an initial driving stage for the clock signal. The output of the buffer or driver 110 is coupled to the clock input of the clock distribution group I 104 and to the input of a second buffer or driver 112. The output of the second buffer or driver 112 is coupled to the clock input of the clock distribution group II 106 and to the input of a third buffer or driver 114. The output of the third buffer or driver 114 is coupled to the clock input of the clock distribution group III 108 and to the input of yet another buffer if more clock distribution groups are needed.

In operation, each of the buffer or driver 112 and 114 causes the clock signal at their respective input to undergo a delay or phase shift as it is produced at their respective outputs. For this example, assume that the line length between the buffers and the clock input of the clock distribution network are negligible and do not affect the phase of the clock signal. Assuming that the relative phase of the clock signal at the output is given by a reference phase of $\phi_0$, then the relative phase of the clock signal at the output of buffers or drivers 112 and 114 are $\phi_1$ and $\phi_2$, respectively, due to the phase shift of the clock signal caused by the buffers or drivers. As a result of these phase shifts, the clock signal at the clock inputs of clock distribution groups I, II and III (104, 106 and 108) have relative phases of $\phi_0$, $\phi_1$, and $\phi_2$. If the relative phases $\phi_0$, $\phi_1$, and $\phi_2$ are different, the clock recipients within each of the distribution groups will be clocked at different times. This results in the reduction of ground bounce and $V_{DD}$ noise. Although the preferred manner of achieving the delay or phase shift in the clock signal is by use of buffers or drivers, it shall be understood that other devices that causes delays or phase shift in the clock signal may also be used.

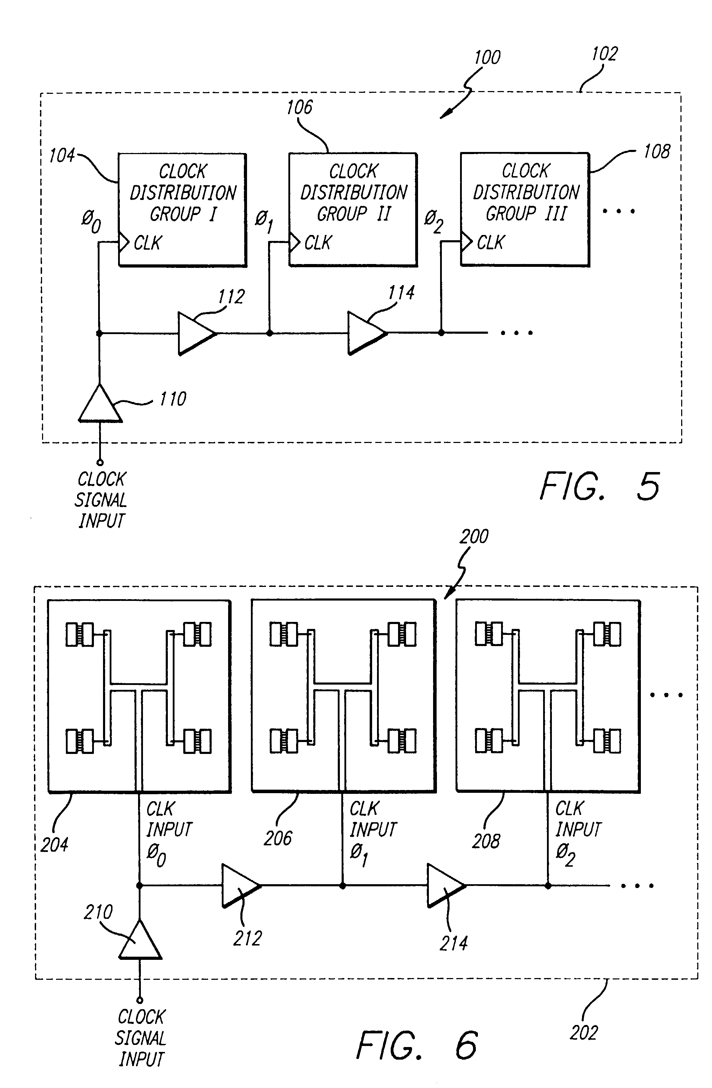

Referring to Figure 6, a block diagram of a more specific embodiment of a clock distribution network 200 per another aspect of the invention is shown. The clock distribution network 200 is useful for distributing the clock signal to clock recipients of an ASIC and is typically formed on an ASIC substrate 202. The clock distribution network 200 includes two or more balanced clock trees 204, 206 and 208 which are of the same type as the balanced clock tree 30 of the prior art shown in Figure 2. The clock distribution network 200 also includes at least buffers or drivers 210, 212 and 214 formed on the substrate 202 for causing the clock signal to have a relative phase of $\phi_0$, $\phi_1$, and $\phi_2$ at the inputs of balanced clock trees 204, 206 and 208. The difference in phase of the clock signal at the input of each of the balanced clock tree causes the clock recipients associated with each tree to be clocked at different times. Again, this results in the reduction of ground bounce and $V_{DD}$ noise. It shall be understood that other devices that causes delays or phase shift in the clock signal may also be used instead of the buffers or drivers.

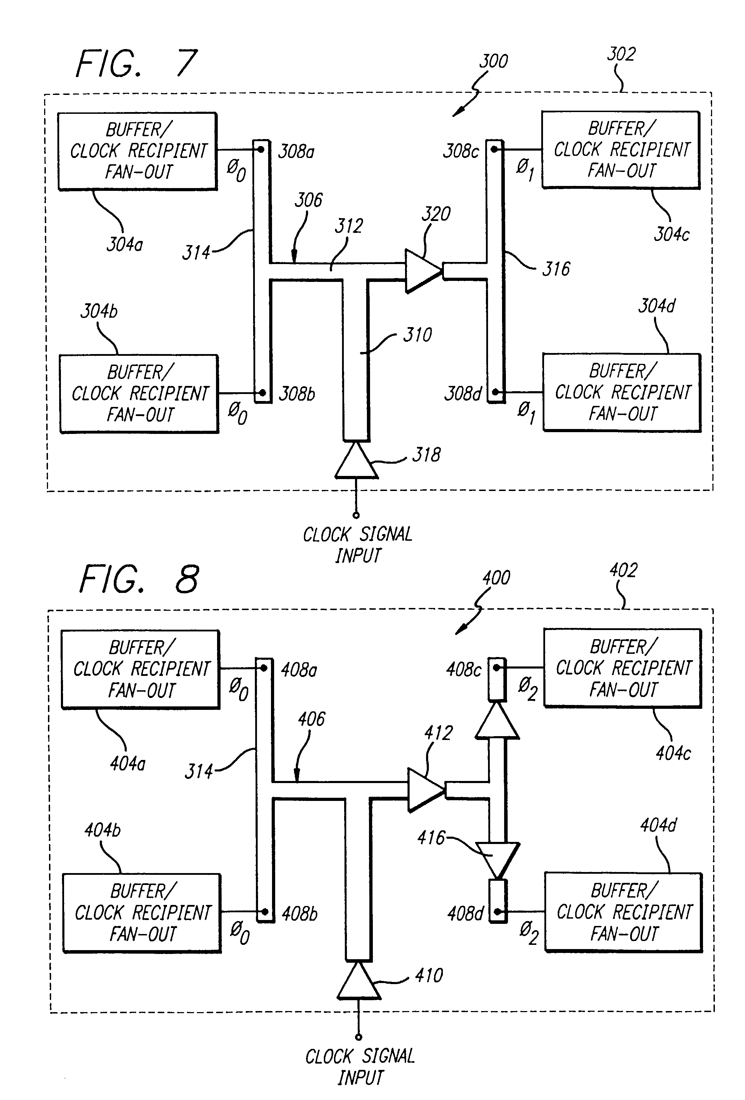

Referring to Figure 7, a block diagram of a clock distribution network 300 as per yet another aspect of the invention is shown. The clock distribution network is useful for distributing the clock signal to the clock recipients of an ASIC and is typically formed on the ASIC substrate 302. The clock distribution network 300 is similar to the prior art balanced clock tree 30 shown in Figure 3 in that it includes a plurality of buffer tree networks 46 coupled to respective clock recipients 48; in Figure 7, this combination is referred to as the buffer/clock recipient fan-out 304, for short. Each of the buffer/clock recipient fan-out 304 are coupled to the ends 308a-d of an H-tree conductive path 306, similar to the H-tree conductive path 36 with an entry conductive line 310 coupled to the middle of the mid-section conductive line 312, and the mid-section conductive line having opposing ends coupled to the middle of two outer conductive lines 314 and 316. The clock distribution network 300 also includes a main buffer 318 having an input for receiving the clock signal and an output coupled to an end of the entry conductive line 310 of the H-tree conductive path 306. The clock distribution network 300 also includes a buffer or driver 320 in an conductively interrupted portion of the mid-section conductive line 312 of the H-tree conductive path 306 preferably in between the end of the entry conductive line 310 and the outer conductive line 316.

In operation, the H-tree conductive path 306 routes or splits the clock signal in a manner that the clock signal at the ends 308a-b of the outer conductive line 314 cycles with a relative phase of $\phi_0$. The buffer or driver 320 causes a delay or phase-shift in the clock signal that the clock signal at the ends 308c-d cycles at a relative phase of $\phi_1$. Because there is a relative phase difference of the clock signal at the clock inputs of buffer/clock recipient fan-out 304a-b and 304c-d, the clock recipients of buffer/clock recipient fan-out 304a-b will be clocked at a different time than those of buffer/clock recipient fan-out 304c-d. This results in a reduction in the adverse effects of ground bounce and $V_{DD}$ noise. This clock distribution network 300 is a two-stage design because it consists of two groups of clock recipients being clocked at different times.

Referring to Figure 8, a block diagram of a clock distribution network 400 as per still another aspect of the invention is shown. The clock distribution network 400 is useful for routing the clock signal to clock recipients of an ASIC and is typically formed on an ASIC substrate 402. The clock distribution network 400 is similar to that of clock distribution network 300 in that includes an H-tree conductive path 406 having ends 408a-d coupled to four buffer/clock recipient fan-outs 404a-d, respectively, and a main buffer or driver 410. It also includes three other buffers or drivers 412, 414 and 416. The H-tree conductive path 406 routes or splits the clock signal from the output of the main buffer 410 to the ends 408a-b in a manner that the clock signal thereat cycles at a relative phase of $\phi_0$. The buffers 412, 414 and 416 causes a delay or phase-shift in the clock signal in a manner that the clock signal routed to the ends 408c-d cycles thereat with a relative phase of $\phi_1$.

Because of the relative phase difference of the clock signal at the clock inputs of buffer/clock recipient fan-out 404a-b and 404c-d, the clock recipients of buffer/clock recipient fan-out 404a-b will be clocked at a different time than those of buffer/clock recipient fan-out 404c-d. The results in a reduction in the adverse effects of ground bounce and $V_{DD}$ noise. This clock distribution network 400 is still a two-stage design because it consists of two groups of clock recipients being clocked at different times. However, it differs from the clock distribution network 300 in that it has an one driving stage for each of buffer/clock recipient fan-outs 408c-d.

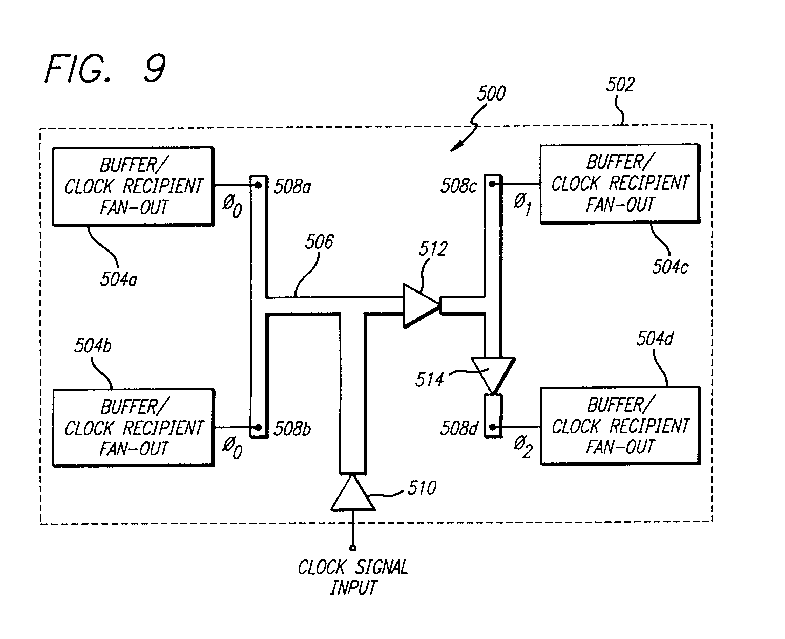

Referring to Figure 9, a block diagram of a clock distribution network 500 as per still another aspect of the invention is shown. The clock distribution network 500 is useful for routing the clock signal to clock recipients of an ASIC and is typically formed on an ASIC substrate 502. The clock distribution network 500 is similar to that of clock distribution networks 300 and 400 in that it includes an H-tree conductive path 506 having ends 508a-d coupled to four buffer/clock recipient fan-outs 504a-d, respectively, and a main buffer or driver 510. It further includes three other buffers or drivers 512, 514 and 516. The H-tree conductive path 506 routes or splits the clock signal from the output of the main buffer 510 to the ends 508a-b in a manner that the clock signal thereat cycles at a relative phase of $\phi_0$. The buffer or driver 512 causes a delay or phase-shift in the clock signal in a manner that the clock signal is routed to the end 508c in a manner that it cycles with a relative phase of $\phi_1$. The buffer or driver 514 causes an additional delay or phase-shift in the clock signal above that caused by buffer or driver 512 so that the clock signal is routed to the end 508c in a manner that it cycles with a relative phase of $\phi_2$.

Because of the relative phase differences of the clock signal at the clock inputs of buffer/clock recipient fan-out 504a-b, 504c and 504d, the clock recipients of buffer/clock recipient fan-outs 504a-b will be clocked at a different time than those of buffer/clock recipient fan-out 504c, which, in turn, is clocked at a different time than those of buffer/clock recipient fan-out 504d. This results in a reduction in the adverse effects of ground bounce and $V_{DD}$ noise. This clock distribution network 500 is a three-stage design because it consists of three groups of clock recipients being clocked at different times.

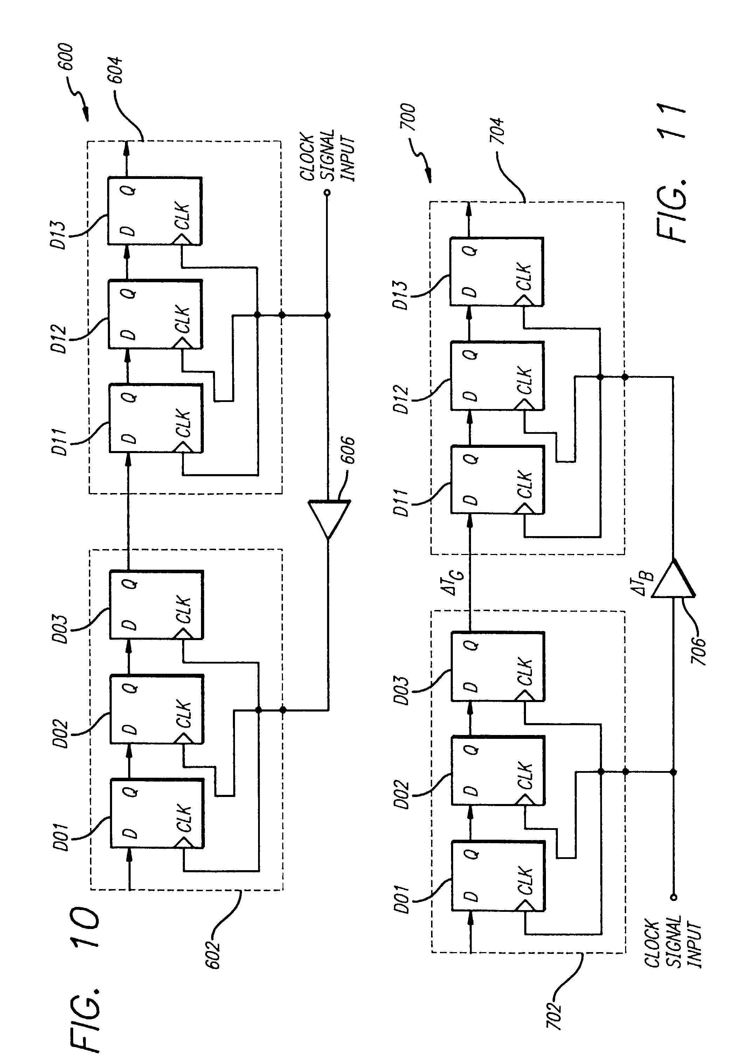

Figure 10 shows a block diagram of two chains of clock recipients (D01-03 and D11-D13) of respective clock distribution groups, balanced clock trees or buffer/clock recipient fan-outs 602 and 604 of an ASIC 600 in data communication with each other. More specifically, data in the latches D01-D03 of group 602 are being clocked to latches D11-13 of group 604. When two groups of clock recipients per any of the embodiments described above of the invention are in data communication as shown in Figure 10, it is preferred that the clock signal is routed in a direction opposite the flow of data. In other words, the delaying or phase-shifting element, such as the buffer or driver 606, should be arranged so that the group receiving the data should be clocked first, and the group sending the data should be clocked second. In the example shown in Figure 10, the clock recipients of group 604 (group receiving data) will be clocked before those of group 602 (group sending data). This manner of routing the clock signal prevents clock skew problems that may occur when data is sent from one group to another. Although this is the preferred manner of routing the clock signal, this is not to say that the clock signal can be routed in a direction of data flow.

Figure 11 shows a block diagram of two chains of clock recipients (D01-03 and D11-D13) of respective clock distribution groups, balanced clock trees or buffer/clock recipient fan-outs 702 and 704 of an ASIC 700 in data communication with each other. More specifically, data in the latches D01-D03 of group 702 are being clocked to latches D11-13 of group 704. In this case, the clock signal is routed in the direction of data flow; that is, from group 702 to 704. In other words, clock recipients in group 702 (group sending data) is clocked before clock recipients of group 704 (group receiving data). Reduction or elimination of clock skew can be accomplished if the delay $\Delta T_G$ of the data propagation between the groups is greater than the delay $\Delta T_B$ of the clock signal caused by the buffer or driver 706. This insures that the data clocked to the output of latch D03 does not reach the input of latch D11 before it is clocked. If it does, clock skew problems occur.

Although the present invention has been described in detail with regarding the exemplary embodiments and drawings thereof, it should be apparent to those skilled in the art that various adaptations and modifications of the present invention may be accomplished without departing from the spirit and scope of the invention. Accordingly, the invention is not limited to the precise embodiment shown in the drawings and described in detail hereinabove.

**Claims**

1. A clock distribution network for an integrated circuit, comprising:

   a first clock distribution group having a first clock input for receiving a clock signal;

   a delay element for delaying said clock signal a pre-determined amount of time to produce a delayed clock signal; and

   a second clock distribution group having a second clock input for receiving said delayed clock signal.

2. The clock distribution network of claim 1, wherein said first and second clock distribution groups are first and second balanced clock trees, respectively.

3. The clock distribution network of claim 2, wherein said delay element includes a clock-receiving input coupled to said second clock input of said second balanced clock tree, said delay element also includes a clock-producing output coupled to the first clock input of said first balanced clock tree.

4. The clock distribution network of claim 2 or 3, wherein said first and second balanced clock tree are coupled to each other for communicating data.

5. The clock distribution network of claim 2, 3 or 4, wherein said first and second balanced clock tree are coupled to each other in a manner that data is capable of being clocked from said second balanced clock tree to said first balanced clock tree.

6. The clock distribution network of claim 2, 3 or 4, wherein said first and second balanced clock tree are coupled to each other in a manner that data is capable of being clocked from said first balanced clock tree to said second balanced clock tree.

7. The clock distribution network of any of claims 1 to 6, wherein said delay element is a buffer or a driver.

8. The clock distribution network of any of claims I to 6, wherein said first and second balanced clock trees each include:

   an H-tree conductive structure coupled to said respective first and second clock inputs;

   a plurality of buffer-tree networks connected to said H-tree conductive structure at points thereof where the relative phase of the clock signal is capable of being substantially the same;

a plurality of clock recipients having recipient clock inputs; and

a plurality of clock routing networks for routing the clock signal from the input of said buffer-tree to said recipient clock inputs in a manner that the phases of the clock signal at each of said recipient clock inputs are substantially the same.

9. The clock distribution network of claim 8, wherein said clock routing networks includes a plurality of conductive lines of equal lengths.

10. The clock distribution network of claim 8, wherein said clock routing networks include at least one current load for causing a phase shift in said clock signal.

11. A method of providing a clock signal to clock recipients in an integrated circuit, comprising:

providing said clock signal to a first group of clock recipients, wherein the clock signal at the clocking input of the clock recipients of said first group cycles with a first relative phase; and

providing said clock signal to a second group of clock recipients, wherein the clock signal at the clocking input of the clock recipients of said first group cycles with a second relative phase which is different than said first relative phase.

12. The method of claim 11, further including the step of delaying said clock signal to form said second relative phase.

13. The method of claim 12, wherein the delaying of said clock signal is performed by a buffer or driver.

14. The method of claim 11, 12 or 13 further including the step of shifting the phase of said clock signal to form said second relative phases.

15. The method of claim 14, wherein the shifting the phase of said clock signal is performed by a buffer or driver.

16. The method of any of claims 11 to 15, wherein the step of providing said clock signal to said first group of clock recipients includes the step of providing said clock signal to said first group using a first balanced clock tree.

17. The method of claim 16, wherein the step of providing said clock signal to said second group of clock recipients includes the step of providing said clock signal to said first group using a second balanced clock tree.

18. The method of claim 17, wherein the steps used by said first and second balanced clock trees for providing the clock signal to said first and second group of clock recipients includes:

splitting the clock signal into first and second clock signals by way of a conductive structure;

coupling the first clock signal to a first buffer tree-network by way of a first region of said conductive structure;

coupling the second clock signal to a second buffer tree-network by way of a second region of said conductive structure in a manner that the phases of said first and second clock signal are substantially the same at said first and second regions; and

coupling at least a portion of said first and second clock signals from said first and second buffer tree-network to said first and second groups of clock recipients, respectively.

19. The method of claim 18, wherein the step of splitting the clock signal includes the step of splitting the clock signal by way of an H-tree conductive structure.

20. An integrated circuit comprising:

a substrate;

a first balanced clock tree formed on said substrate that includes a first clock input for receiving a clock signal;

a phase shifting element for causing a phase shift in said clock signal; and

a second balanced clock tree formed on said substrate that includes a second clock input for receiving said phase-shifted clock signal.

21. The integrated circuit of claim 20, wherein said phase shifting element includes a clock-receiving input coupled to said second clock input of said second balanced clock tree, said delay element also includes a clock-producing output coupled to the first clock input of said first balanced clock tree.

22. The clock distribution network of claim 20 or 21, wherein said first and second balanced clock tree are coupled to each other for communicating data.

23. The clock distribution network of claim 22, wherein said first and second balanced clock tree are coupled to each other in a manner that data is capable of being clocked from said second balanced clock tree to said first balanced clock tree.

24. The clock distribution network of claim 22, wherein said first and second balanced clock tree are coupled to each other in a manner that data is capable of being clocked from said first balanced clock tree to said second balanced clock tree.

25. The clock distribution network of any of claims 20 to 24, wherein said delay element is a buffer or a driver.

26. The clock distribution network of any of claim 20 to 25, wherein said first and second balanced clock trees each include:

    an H-tree conductive structure coupled to respective first and second clock inputs;

    a plurality of buffer-tree networks connected to said H-tree conductive structure at points thereof where the phase of the clock signal is capable of being substantially the same;

    a plurality of clock recipients having recipient clock inputs; and

    a plurality of clock routing networks for routing the clock signal from the input of said buffer-tree to said recipient clock inputs in a manner that the phase of the clock signal at each of said recipient clock inputs is substantially the same.

27. The clock distribution network of claim 26, wherein said clock routing networks includes a plurality of conductive lines of equal lengths.

28. The clock distribution network of claim 27, wherein said clock routing networks include at least one current load for causing a phase shift in said clock signal.

29. A circuit for distributing a clock signal to clock recipients of an integrated circuit comprising:

    a substrate;

    a conductive structure formed on said substrate for transmitting a clock signal;

    a first phase-shift element formed at a first discontinuing portion of said conductive structure to produce a phase-shifted clock signal from said clock signal;

    at least a first group of clock recipients coupled to a first portion of said conductive structure for receiving therefrom said clock signal; and

    at least a second group of clock recipients coupled to a second portion of said conductive structure for receiving therefrom said phase-shifted clock signal in a manner that the second group of clock recipients are clocked together at a different time than when said first group of clock recipients are clocked together.

30. The clock signal distributing circuit of claim 29, wherein the first phase-shifting element is a first buffer or a first driver.

31. The clock signal distributing circuit of claim 29 or 30, further including a second phase-shifting element formed at a second discontinuing portion of said conductive structure for producing a double phase-shifted clock signal from said phase-shifted clock signal, and further including a third group of clock recipients coupled to a third portion of said conductive structure for receiving said double phase-shifted clock signal in a manner that said third group of clock recipients are clocked together at a different time than when said first and second groups of clock recipients are clocked.

32. The clock signal distributing circuit of claim 31, wherein said first and second phase-shifting element are a first and second driver or buffer, respectively.

33. The clock signal distributing circuit of claim 31 or 32, further including a third phase-shifting element formed at a third discontinuing portion of said conductive structure for driving said phase-shifted clock signal to a third group of clock recipients.

34. The clock signal distributing circuit of claim 33, wherein said first phase-shifting element is formed at said first discontinuing portion ofa mid-section conductive line of an H-tree conductive structure and said second and third phase-shifting element is formed on an outer conductive line of said H-tree conductive structure.

FIG. 1
PRIOR ART

FIG. 2
PRIOR ART

FIG. 3
PRIOR ART

# FIG. 4

## PRIOR ART

*48*

D1    D2    D3    D4    D5    D6

| D Q | D Q | D Q | D Q | D Q | D Q |

CLK   CLK   CLK   CLK   CLK   CLK

$\Delta\emptyset_9$    CURRENT LOAD $\Delta\emptyset_8$    $\Delta\emptyset_7$    $\Delta\emptyset_7$    $\Delta\emptyset_8$    $\Delta\emptyset_9$

RECIPIENT CLOCK ROUTING NETWORK 60

$\Delta\emptyset_6$    $\Delta\emptyset_5$    $\Delta\emptyset_4$    $\Delta\emptyset_4$    $\Delta\emptyset_5$    $\Delta\emptyset_6$

$N^{TH}$ LEVEL BUFFER

CLOCK

EP 0 903 660 A1

*FIG. 5*

*FIG. 6*

## FIG. 7

BUFFER/
CLOCK RECIPIENT
FAN-OUT

304a

$\emptyset_0$  308a

306

312  320

316

314

BUFFER/
CLOCK RECIPIENT
FAN-OUT

304b

$\emptyset_0$  308b

310

318

CLOCK SIGNAL
INPUT

300  302

308c  $\emptyset_1$

BUFFER/
CLOCK RECIPIENT
FAN-OUT

304c

304d

308d  $\emptyset_1$

BUFFER/
CLOCK RECIPIENT
FAN-OUT

## FIG. 8

BUFFER/
CLOCK RECIPIENT
FAN-OUT

404a

$\emptyset_0$  408a

406

412

314

BUFFER/
CLOCK RECIPIENT
FAN-OUT

404b

$\emptyset_0$  408b

410

CLOCK SIGNAL
INPUT

400  402

408c  $\emptyset_2$

BUFFER/
CLOCK RECIPIENT
FAN-OUT

404c

416

404d

408d  $\emptyset_2$

BUFFER/
CLOCK RECIPIENT
FAN-OUT

## FIG. 9

EP 0 903 660 A1

FIG. 10

FIG. 11

**European Patent Office**

**EUROPEAN SEARCH REPORT**

Application Number

EP 98 30 6762

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 612 163 A (AT & T CORP) 24 August 1994<br><br>* column 2, line 3 - column 3, line 48; figure 1 * | 1,7, 11-14, 20,24, 25,29,30 | G06F1/10 |
| X | LIPMAN J: "GROWING YOUR OWN IC CLOCK TREE" EDN ELECTRICAL DESIGN NEWS, vol. 42, no. 6, 14 March 1997, pages 40-46, 48, XP000695232 * page 7, right-hand column, paragraph 2 * | 1-34 | |
| X | US 5 122 679 A (ISHII SHUICHI ET AL) 16 June 1992 * column 1, line 34 - column 2, line 9; figures 1-7 * | 1 | |
| A | JUN DONG CHO ET AL: "A BUFFER DISTRIBUTION ALGORITHM FOR HIGH-SPEED CLOCK ROUTING" PROCEEDINGS OF THE DESIGN AUTOMATION CONFERENCE, DALLAS, JUNE 14 - 18, 1993, no. CONF. 30, 14 June 1993, pages 537-543, XP000371362 INSTITUTE OF ELECTRICAL AND ELECTRONICS ENGINEERS * page 538, right-hand column, paragraph 2; figure 1 * | 1-34 | TECHNICAL FIELDS SEARCHED (Int.Cl.6)<br><br>G06F |

The present search report has been drawn up for all claims

| Place of search | Date of completion of the search | Examiner |
|---|---|---|
| THE HAGUE | 9 December 1998 | Ciarelli, N |

EP 0 903 660 A1

**ANNEX TO THE EUROPEAN SEARCH REPORT
ON EUROPEAN PATENT APPLICATION NO.**

EP 98 30 6762

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-1998

| Patent document cited in search report | Publication date | Patent family member(s) | Publication date |
|---|---|---|---|
| EP 0612163 A | 24-08-1994 | JP 6303244 A | 28-10-1994 |
| US 5122679 A | 16-06-1992 | JP 2105910 A | 18-04-1990 |

For more details about this annex : see Official Journal of the European Patent Office, No. 12/82

20